# EUROPEAN PATENT SPECIFICATION

(11) **EP 3 422 603 B1**
(45) Date of publication and mention of the grant of the patent: **18.08.2021**
(21) Application number: 17305817.3
(22) Date of filing: 29.06.2017
(51) Int. Cl.: H04B 10/075, H04B 10/079

(54) **OPTICAL MONITORING DEVICE AND OPTICAL MONITORING METHOD**
OPTISCHE ÜBERWACHUNGSVORRICHTUNG UND OPTISCHES ÜBERWACHUNGSVERFAHREN
DISPOSITIF ET PROCÉDÉ DE SURVEILLANCE OPTIQUE

(43) Date of publication of application: 02.01.2019
(73) Proprietor: Nokia Solutions and Networks Oy, 02610 Espoo (FI)
(72) Inventor: BOITIER, Fabien, 91620 NOZAY (FR); BIGO, Sébastien, 91620 NOZAY (FR)
(74) Representative: Nokia EPO representatives

(56) References cited:
- WO-A1-03/088542
- US-A1- 2008 220 725
- US-A1- 2009 047 026
- US-A1- 2014 064 723

## Description

### FIELD OF THE INVENTION

The present invention relates to optical communication network.

### BACKGROUND OF THE INVENTION

Optical communications are widely used in modern networks in a broad variety of use case scenario. Submarine optical networks or terrestrial optical networks offer huge capacity links that span over great distances. Optical networks are also used in dense area such as metropolitan networks or datacenter that require high capacity over short periods of time. Reliability of optical communication networks is crucial since they often transport many data flows.

An aspect to ensure reliability is that sensitive optical paths are usually protected in different manners through redundancy or alternative data links. Such mechanisms provide fallback solutions when an interruption or an outage occurs for example.

Another aspect to ensure reliability is the monitoring of the optical transmissions. Optical performance monitoring (OPM) is an integral part of a transmission system design. As optical network architectures evolve, unique monitoring capabilities are often required. WO03/088542 shows a monitoring device for monitoring optical signals in a multichannel system. The monitoring device monitors each channel for uncorrected bit errors to provide appropriate forward error correction at the transmitter. Furthermore optical transparent networks are making use cases of OPM not only to perform the task of reliability monitoring but also provide direct value by allowing to reduce operational expenses.

It appears that there exists various needs of monitoring for which different solutions are defined but not necessarily compatible with each other.

A new OPM solution is then needed to enhance reliability without impacting existing or future optical networks, and that offers a broad interoperability amongst legacy networks and long term compatibility. The new OPM solution has also to be cost effective when in place in an optical network.

### SUMMARY OF THE INVENTION

The invention aims to remedy all or some of the disadvantages of the above identified prior art. It particularly proposes a monitoring device for monitoring optical signals.

A first aspect of the invention relates then to a monitoring device for monitoring an optical signal to be processed by an optical transceiver, said monitoring device comprising:
- a first interface with a controller,
- a second interface with the optical transceiver,
- a monitoring processing unit,
the monitoring processing unit being adapted:
- to be configured with a signal processing algorithm received through the first interface,
- to receive raw samples through the second interface, said raw samples corresponding to a portion from the optical signal prior to conversion of said portion into informative symbols,
- to evaluate a set of monitoring parameters by processing the raw samples according to the signal processing algorithm.

Thus, thanks to these features, the monitoring device is enabled to monitor an optical signal to be processed by an optical transceiver. Through the first interface, the monitoring device is adapted to be configured with a signal processing algorithm by the controller. Advantageously any kind of signal processing algorithm may be sent by the controller to the monitoring device, which allows the monitoring device to monitor in various manner the optical signal to be processed. It allows also to configure the monitoring device dynamically depending on the characteristics of the optical signal that are of interest. The monitoring device is also future proof as it is configurable and updatable over the lifetime of the transceiver with which it is associated. Thanks to its upgradability, the device monitoring has the capability to incorporate monitoring enhancement and is effective on optical signals that vary in quality from the beginning of network's life to its end. Furthermore the monitoring processing unit is adapted to receive raw samples from the optical signal to be processed, and from these raw samples, to evaluate set of monitoring parameters. The monitoring device allows then advantageously to monitor the optical signal in parallel and independently from the transceiver. The raw samples and their processing then do not bias the nominal processing of the transceiver. Furthermore since raw samples are provided prior to their conversion into informative symbols, it allows the monitoring device to operate on unprocessed samples and independently from the processing to be operated by the transceiver. The determination of the set of monitoring parameters is achievable by the monitoring process unit at a different processing rate than the transceiver. A lower processing rate permits to use less computation horse power for monitoring and hence to reduce the costs of monitoring.

According to various embodiments, the monitoring device comprises one or more of the features below, which should be considered in any possible technical combinations:
- the monitoring device is adapted to monitor coherent optical signals,
- the monitoring processing unit evaluates periodically the set of monitoring parameters according to a refresh rate,
- the refresh rate is larger than a duration of a symbol from the optical signal,
- the monitoring processing unit is further adapted to evaluate the set of monitoring parameters according to reference samples,
- the monitoring device further comprises a third interface interfacing said monitoring device with the optical transceiver, the reference samples being provided by said optical transceiver through said third interface and corresponding to a portion of the optical signal after having being converted into informative symbols and Forward Error Correction processed,
- the reference samples are provided by the controller through the second interface and correspond to a portion of a training sequence, said training sequence having been conveyed by the optical signal to be processed by the optical transceiver,
- the monitoring device is a Software Defined Networking monitoring device,
- the raw samples correspond to a portion from the optical signal after optical to electrical conversion of said optical signal,
- the raw samples correspond to a portion from the optical signal after dispersion compensation and timing recovery being applied to said optical signal.

A second aspect of the invention relates then to an optical transceiver for receiving an optical signal, comprising:
- an analog to digital frontend, for converting the optical signal from an optical domain to an electrical domain, in the electrical domain,
- a dispersion compensation unit for compensating dispersion of the electrical signal,
- a timing recovery unit for recovering timing of the electrical signal,
- a signal processing unit for converting the electrical signal into informative symbols,
- a monitoring device according to the first aspect of the invention,
the optical transceiver providing to the monitoring device through the second interface raw samples corresponding to a portion of the electrical signal prior to conversion of said portion into informative symbols.

Thus, thanks to these features, the optical transceiver is adapted to receive an optical signal and comprises the monitoring device that receives excerpts of the received optical signal in order to determine a set of monitoring parameters. The second interface from the monitoring device, which receives raw samples for monitoring, is advantageous for having an independent monitoring means. It allows to perform the receiving and the decoding of the optical signal by the optical transceiver as nominal as possible.

According to various embodiments, the optical transceiver comprises one or more of the features below, which should be considered in any possible technical combinations:
- the optical transceiver further comprises:
   o a dispersion compensation unit for compensating dispersion of the optical signal,
   o a timing recovery unit for recovering timing of the optical signal,
   o the monitoring device further adapted to process the raw samples corresponding to a portion from the optical signal after dispersion compensation and timing recovery being applied to said optical signal,
- the monitoring device is an independent device comprised in the optical transceiver,
- the monitoring device is comprised in the signal processing unit,
- the optical transceiver is a Software Defined Networking optical transceiver.

A third aspect of the invention relates then to a method for monitoring an optical signal to be processed by an optical transceiver, the method comprising the step of:
- receiving a signal processing algorithm from a controller through a first interface comprised in the monitoring device,
- configuring a monitoring processing unit with the signal processing algorithm, said monitoring processing unit being comprised in the monitoring device,
- receiving raw samples from the optical transceiver through a second interface comprised in the monitoring device, said raw samples corresponding to a portion from the optical signal prior to conversion of said portion into informative symbols,
- evaluating a set of monitoring parameters by processing the raw samples according to the signal processing algorithm.

### BRIEF DESCRIPTION OF THE FIGURES

Some embodiments of the present invention are now described, by way of example only, and with reference to the accompanying drawings, in which:
- FIG. 1 is a schematic block diagram of an optical network according to an embodiment of the invention,
- FIG. 2 is a schematic block diagram of a monitoring device according to an embodiment of the invention,
- FIG. 3 is a schematic block diagram of another monitoring device according to an embodiment of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non-limiting and serve only for the understanding of the invention.

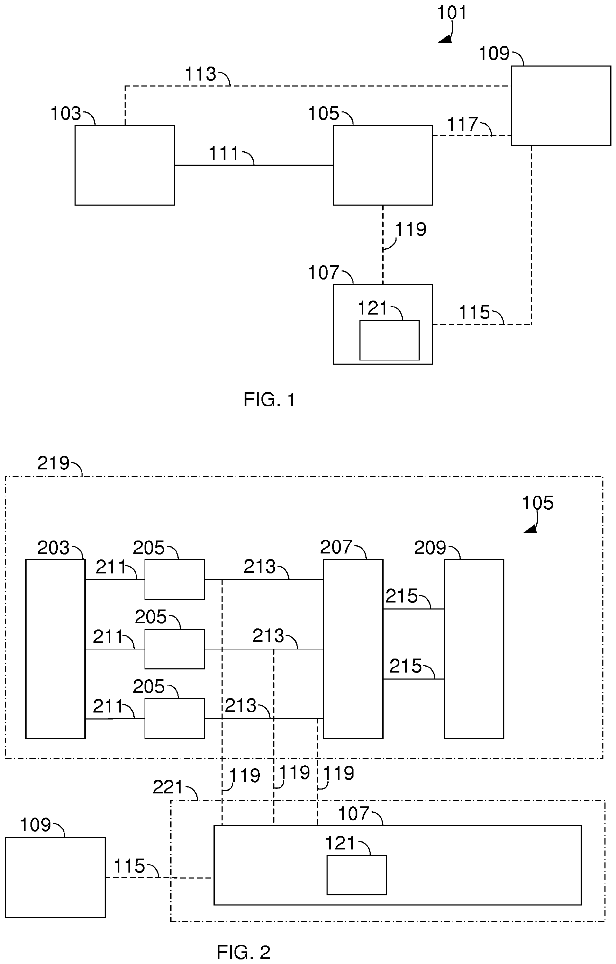

Referring to figure **FIG. 1****,** a schematic block diagram of an optical network according to an embodiment of the invention.

In an embodiment an optical network 101 is depicted as a schematized and simplified representation. It is depicted hereinafter with an optical transceiver 103 and an optical transceiver 105, but it is not limited to such topology of optical network. The optical network may comprise a plurality of optical nodes, each comprising at least one or more transceivers, said optical nodes being cascaded together to define cascaded lightpaths, or being organized in a meshed optical network.

In an example the optical network 101 is implemented in a datacenter (not depicted) and interconnects the servers, the storage units and the control centers of the datacenter and interconnects also the datacenter with other datacenters.

In another example the optical network 101 is implemented in a metropolitan area network and interconnects its network elements together and interconnects said metropolitan network to other networks.

In yet another example, the optical transceiver 103 and the optical transceiver 105 are part of a submarine or terrestrial optical network.

The optical transceiver 103 and the optical transceiver 105 are interconnected through an optical waveguide 111, such as an optical fiber. The optical transceiver 103 transmits optical signals addressed to the optical transceiver 105, said optical signals propagating along the optical waveguide 111. Data packets are converted into informative symbols that are embedded into optical signals by a transmitting process operated by the optical transceiver 103. At the receiving side, the terms "informative symbols" designate data sequences obtained after all steps of receiver signal processing, except possibly error correction coding. Said informative symbols allows to re-construct or re-assemble data packets originated from the transmitting side. In an example, the optical transceiver 103 also comprises an optical receiver for receiving optical signals transmitted by other optical nodes, for example the optical transceiver 105. In an example the optical waveguide 111 comprises a plurality of optical fibers, either monomodes or multimodes.

Preferably the optical transceiver 105 and the optical transceiver 103 are adapted to process coherent optical signals.

A controller 109 is connected to the optical transceiver 103 through an interface 113. Said interface 113 is used to supervise said optical transceiver 103. The interface 113 is adapted to convey control messages in the control plan, either from the controller 109 or from the optical transceiver 103. Said control messages may comprise configuration information, status information. In variants where the controller 109 is paired with a network element in the data plane, or the controller 109 is further comprised in another optical node, the interface 113 may also convey data packets.

The controller 109 is also connected to the optical transceiver 105 through the interface 117. Said interface 117 is adapted for the exchange of control messages in the control plane between said controller 109 and said optical transceiver 105. The controller 109 is enabled to configure and control the optical transceiver 105 through first interface 117. Said interface 117 may also convey data flows/data packets/informative data between the two entities.

The optical network 101 also comprises a monitoring device 107. In an embodiment the monitoring device 107 is an independent network element from the optical network 101. In another embodiment the monitoring device 107 is a standalone device within the optical transceiver 105. In yet another embodiment the monitoring device 107 is comprised in an element from the optical transceiver 105.

The monitoring device 107 comprises a first interface 115 with the controller 109. The first interface 115 from said monitoring device 107 is adapted to exchange messages with the controller 109. Said messages are control plane messages for configuring and/or controlling said monitoring device 107. The first interface 115 is also adapted to receive informative data, data packets or data flows from the controller 109.

The monitoring device 107 further comprises a second interface 119 with the optical transceiver 105. Said second interface 119 from said monitoring device 107 is adapted to exchange content with the optical transceiver 105. Such content comprises samples extracted from the optical signal received by the optical transceiver 105 through the optical waveguide 111, the extraction of said samples being done at different stages of the processing to be operated on the optical signal by said optical transceiver 105.

The monitoring device 107 further comprises a monitoring processing unit 121. Said monitoring process unit 121 is adapted to process raw samples according to various signal processing algorithms. These signal processing algorithms are provided by the controller 109 to the monitoring device 107 through the first interface 115, and are used to configure the monitoring process unit 121. In an example a signal processing algorithm is embedded into a control plane message sent by the controller 109 to the monitoring device 107.

The monitoring processing unit 121 is provided with the samples received through the second interface 119. The monitoring process unit 121 processes said samples to evaluate or determine a set of monitoring parameters. Said evaluation of the monitoring parameters depends on the configuration of said monitoring processing unit 121 with the signal processing algorithm provided by the controller 109. The resulting evaluated monitoring parameters may be provided to the optical transceiver 105 in order to adapt the processing to be achieved on the optical signal, and/or provided to the controller 109. Advantageously, the monitoring process unit 121 is configured successively with different signal processing algorithms in order to monitor different kind of set of monitoring parameters.

Referring to figure **FIG. 2****,** a schematic block diagram of a monitoring device according to an embodiment of the invention is depicted.

The optical transceiver 105 comprises an analog to digital frontend 203 in charge of converting the optical signal to be processed into digital samples through an optical to electrical conversion.

The analog to digital fronted 203 is connected through links 211 to three dispersion compensation units and timing recovery units 205. In figure FIG. 2, the compensation of the chromatic dispersion and the recovering of the timing is schematized with a single block 205 but these two functionalities may be separated in two different units. Furthermore three dispersion compensation units and timing recovery units 205 are depicted but there could be less than three of these units or more than three. It should be noted that the dispersion compensation and the timing recovery are optional processing blocks. For example, when the optical waveguide 111 between the optical transceiver 103 and the optical transceiver 105 spans over a short distance, the propagating optical signal is not too much altered by impairments or propagation loss, so applying dispersion compensation and timing recovery is not necessary.

Each of the dispersion compensation units and timing recovery units 205 are connected through a link 213 to a signal processing unit 207. The signal processing unit receives the optical signal in the electrical domain and processes it in order to extract the informative symbols that were transmitted by the optical transceiver 103. In an example, the signal processing unit 207 is adapted to demodulate the modulated samples of the optical signal after its conversion by the analog to digital converters from the analog to digital frontend 203 and eventually after dispersion compensation and recovery of the timing.

The signal processing unit 207 provides the result of its processing, namely the informative symbols to a Forward Error Correction (FEC) unit 209, through links 215 that connects the two units together. The FEC unit 209 is adapted for correcting errors with errors-correcting codes embedded at the transmission of the optical signal.

In an embodiment, the monitoring device 107 comprises three second interfaces 119, each of the second interfaces 119 being connected to the optical transceiver 107, and each of the second interfaces 119 corresponding to a processing path of the optical transceiver 105. Such processing path comprises a link 211, optionally a dispersion compensation unit and timing recovery unit 205, a link 213, and the corresponding processing functionalities offered by the signal processing unit 207 and the optional FEC unit 209.

In an embodiment, each of the second interfaces 119 is provided with raw samples corresponding to a portion from the optical signal prior to conversion of said portion into informative symbols.

In an embodiment, not depicted in figure FIG. 2, the raw samples are captured from the optical signal just after it has been converted from the optical domain to the electrical domain by the analog to digital frontend 203. The extracted portion of the optical signal is provided to the second interfaces 119 which are connected to the outputs of the analog to digital frontend 203. Said raw samples corresponds then to undemodulated symbols prior to any other processing. The sequence of raw samples that is provided to each of the second interface 119 is tunable in length, from microsecond to milliseconds, or in number of raw samples. A new sequence of raw samples is provided according to a refresh rate that is configurable. The characteristics of the length and the refresh rate of the raw samples can be defined by the controller 109 through configuration messages sent to the first interface 115 in an example.

In another embodiment, the raw samples are extracted from the optical signal at the outputs of the dispersion compensation unit and the timing recovery unit 205, the second interface 119 being connected to said outputs. Using the output of the timing recovery unit 205 as a probe to capture the sequence of raw samples is advantageous as it allows to reduce the length of the sequence as the effects of the chromatic dispersion and/or the frequency drift on the optical signal on the transmission line have already been recovered. Alternatively the raw samples are captured at the output of the dispersion compensation unit, and prior to recovery of the timing of the optical signal, in which case the length of the sequence may also be shortened compared to extracting the raw samples right after the conversion of the optical signal into the electrical domain.

In an embodiment, each of the second interfaces 119 provides the raw samples, either captured at the output from the analog to digital fronted 203 or captured at the output of the timing recovery unit 205, to the monitoring processing unit 121. From these raw samples that corresponds to a portion of the received optical signal, the monitoring processing unit 121 evaluates a set of monitoring parameters. The evaluation is performed according to the signal processing algorithm provided by the controller 109 for configuring said monitoring processing unit 121.

Advantageously, when the raw samples are captured at the output of the analog to digital frontend 203, the evaluated monitoring parameters are representative of the optical signal prior to any processing that could induce further degradation of said optical signal. In such way it is possible to simply evaluate the impact of the transmission medium on the propagation of the signal.

Capturing the raw samples after chromatic dispersion compensation and timing recovery is also advantageous. It allows to reduce the number of raw samples in a sequence for the evaluation of monitoring parameters since these two operations have already been applied on the received optical signal. Reducing the number of raw samples in a sequence allows a faster refresh rate of the sequence or a reduction of the required processing capabilities of the monitoring processing unit 121.

In an embodiment, the monitoring device 107 is adapted to operate with the optical transceiver 103 and the optical transceiver 107 being coherent optical transmitters and coherent optical receivers. Said monitoring device 107 is enabled to process a coherent optical signal to deduce the set of monitoring parameters. By the expression "coherent optical signal", it is meant an optical signal transmitted or received in coherent manner by the optical transceiver 103 or the optical transceiver 107. For example, the coherent optical transceiver 107 is adapted to receive an optical signal modulated in phase and in amplitude, polarization multiplexed, and each of his symbol being composed of a plurality of bits.

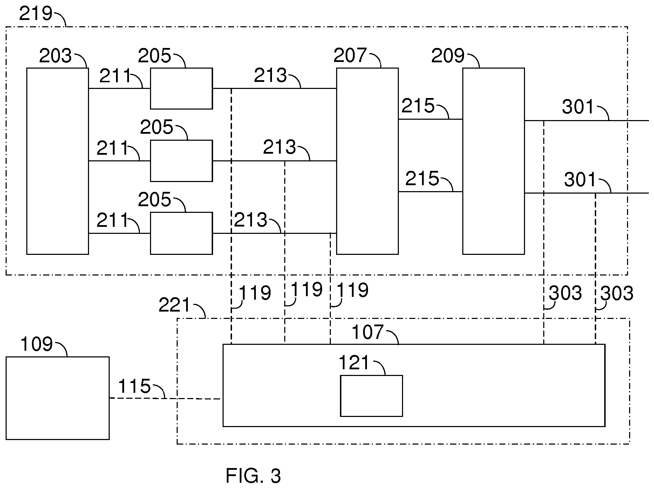

Referring now to figure **FIG.3****,** a schematic block diagram of another monitoring device according to an embodiment of the invention is now depicted.

The FEC unit 209 outputs error corrected informative symbols on links 301. Only two outputs with two links 301 are depicted but the FEC unit 209 may comprise only one or more than two outputs.

In an embodiment, the monitoring device 107 comprises a third interface 303 for receiving error corrected informative symbols produced by the FEC unit 209. In the example of figure FIG. 3, the monitoring device 107 comprises two third interfaces 303, each of them being connected to a link 301. The monitoring device 107 may comprise only a single third interface 303 or as many or less third interfaces 303 than the outputs of the FEC unit 209.

The third interfaces 303 fed the monitoring processing unit 121 with the error corrected informative symbols, which corresponds to synchronize post-FEC sequence of symbols. The monitoring processing unit 121 processes the raw samples provided by the second interface(s) 119, and according to the configuration of the monitoring device 107, in order to determine the set of monitoring parameters, the monitoring processing unit 121 also compares the processed raw samples with the error correct informative symbols, which are considered as a reference. The comparison may be achieved between the error corrected informative symbols and directly with the processed raw samples, in order to further determine an indicator or another monitoring parameter. The monitoring processing unit 121 may also further comprises processing means or ability to process raw samples into informative symbols, including the FEC processing. The comparison may be achieved then between the error-corrected/error free informative symbols as decoded by the nominal processing path of the optical transceiver 105 and the off-line processed error corrected informative symbols as decoded by the monitoring path of the monitoring device 107. Such comparison is advantageous as in case the symbols differ, it indicates a discrepancy between the two processing paths. Such discrepancy is included in the set of monitoring parameter in order to help diagnosing/monitoring the transmission between the optical transceiver 103 and the optical transceiver 105.

In an embodiment, the determination of the set of monitoring parameters is operated from raw samples extracted from a received optical signal conveying informative data. The determination is performed in a nominal way of working of the optical transceivers with real-life informative data which allows a continuous monitoring of the transmission.

In another embodiment, the determination of the set of monitoring parameters is operated from raw samples extracted from a received training sequence. The optical transceiver 103 comprises an interface 113 connected to the controller 109. Through said interface 113, the controller 109 provides a training sequence or pilot sequence to the optical transceiver 103. The training sequence allows to generate a known optical signal with pre-determined characteristics by the optical transceiver 103. Alternatively the optical transceiver 103 comprises a configuration mode in which it generates the known optical signal by generating itself the training sequence. The controller 109 also provides the same training sequence to the monitoring device 107. Once the optical transceiver 103 and the monitoring device 107 have been updated with the training sequence, the optical transceiver 103 transmits the known optical signal to the optical transceiver 105.

The optical transceiver 105 receives the known optical signal. Raw samples are provided to the monitoring device 107 from the probe point located right after the analog-to-digital conversion, or the other probe point located after the chromatic dispersion compensation and the timing recovery. The raw samples are processed by the monitoring processing unit 121 and are being compared with the training sequence provided by the controller 109. Performing such comparison with a reference such as a training sequence allows a more accurate determination of the set of monitoring parameters. The differences between the raw samples and the training sequence may reflect directly an impairment experienced during the transmission of the known optical signal. The determined set of monitoring parameters ease then the monitoring or the diagnosis of an issue.

In embodiments, various monitoring parameters are comprised in the set of monitoring parameters: bit error rate (BER), chromatic dispersion (CD), polarization mode dispersion (PMD), polarization-depend loss (PDL), differential group delay (DGD), state of polarization (SOP), etc. One of these monitoring parameters may require configuration of the monitoring processing unit 121 with a specific signal processing algorithm for example, whereas other signal processing parameters are designed to produce a plurality of monitoring parameters (for example the bit error rate, block error rate or the decoding error rate may be produced using the same signal processing algorithm).

Referring to figures **FIG.2** and **FIG.3****,** a processing block 219 encompasses the nominal processing chain of the optical transceiver 105. The processing block 219 operates in real-time at the symbol rate of the optical signal.

In an embodiment, a monitoring block 221 encompasses the monitoring functionalities of the monitoring device 107. The monitoring block 221 is independent from the processing block 219. It is advantageous to dissociate the monitoring block 221 from the nominal processing as it permits to not impact the processing block 219. Each block is sufficiently isolated to avoid disturbing the processing of one each other. The separation of the monitoring block 221 from the processing block 219 allows also to have different processing domains. The domain from the monitoring block 221 operates at a lower rate or speed than the processing block 219. It is not required that the processing block 219 determines in real-time at the symbol rate the set of monitoring parameters. When comparing the processing rate of the respective domains of the monitoring block 221 and the processing block 219, the determination of the set of parameters can be seen as an off-line processing.

The monitoring block 221 operates at its own pace. In an embodiment the monitoring device 107 determines the set of parameters periodically according to a refresh rate. Said refresh rate is configurable by the controller 109. As the determination of the set of monitoring parameters is independent from the nominal processing and can be seen as off-line processing, the refresh rate may be larger than the duration of a symbol from the optical signal to be processed by the optical transceiver 105.

In an embodiment, the monitoring device 107 is an independent device such as a standalone module or dedicated processing card embedded into the optical transceiver 105. The first interface, second interface or third interface are linked to connectors or buses from the optical transceiver 105.

In another embodiment, the monitoring device 107 is comprised in the signal processing unit 207 from the optical transceiver 105. In an example, the monitoring device 107 is implemented as software functions hosted by a dedicated core of a digital signal processor. In another example, said monitoring device 107 is implemented through isolated and dedicated resources from an ASIC or FPGA that implements the functionalities of the signal processing unit 207. The first interface, second interface or third interface are in these cases either data buses wired electronically or logical data buses implemented in software.

In an embodiment, the optical network 101 is a software defined network (SDN). SDN technologies applies to networks that are dynamically configurable and scalable through software functions. In SDN networks, the data plane and control planes are untied at the network element, so that their respective resources are allocated to said software functions. It allows for example to abstract the allocation of the hardware resources from the higher layer point of view. The controller 107 is a SDN controller enabled to control programmatically or by software any SDN components from the optical network 101. In an example, such SDN controller 107 may be a distributed controller amongst the network elements of the optical network 101. The monitoring device 107 is also a software defined component which can be configured/controlled by software modules by the controller 107. The software defined network monitoring device 107 is advantageous through flexibility and upgradability that are requisites of software defined networks.

The independence and the configurability of the signal processing algorithm and the refresh rate are advantageous for the monitoring device 107. As it is separated from the optical transceiver 105, the monitoring device 107 does not impact the nominal processing of the optical transceiver 105. The set of monitoring parameters are determined without slowing down or degrading the effective decoding of the optical signal. The ability of the monitoring processing unit 121 to be configured by a signal processing algorithm by the controller 109 is advantageous to ensure upgradability and flexibility: after some parameters have been monitored, the monitoring device 107 can be reconfigured to monitor another family of parameters, or the monitoring device 107 may be upgraded with enhanced signal processing algorithms that offer better monitoring performances than the previous one. The adjustable rate of the processing of the monitoring device 107, which is lower than the processing rate of the optical transceiver 105, allows to use less computation resources. In an example the monitoring device 107 is implemented on a standalone processing board using a low-cost general purpose processor such as a "Raspberry Pi" board. Such design of the monitoring device 107 allows to reduce the expanses required for the monitoring of the optical transceiver 105.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A monitoring device (107) for monitoring an optical signal conveying informative symbols to be processed by an optical transceiver (105), said monitoring device (107) comprising:
- a first interface (115) with a controller (109),
- a second interface (119) with the optical transceiver (105),
- a monitoring processing unit (121),
the monitoring processing unit (121) being adapted:
- to be configured with a signal processing algorithm received through the first interface (115),
- to receive raw samples through the second interface (119), said raw samples corresponding to a portion from the optical signal prior to conversion of said portion into informative symbols,
- to evaluate a set of monitoring parameters by processing the raw samples according to the signal processing algorithm.

2. A monitoring device (107) according to claim 1, wherein said monitoring device (107) is adapted to monitor coherent optical signals.

3. A monitoring device (107) according to any of the claims 1 to 2, wherein the monitoring processing unit (121) evaluates periodically the set of monitoring parameters according to a refresh rate.

4. A monitoring device (107) according to claim 3, wherein the refresh rate is larger than a duration of a symbol from the optical signal.

5. A monitoring device (107) according to any of the claims 1 to 4, wherein the monitoring processing unit (121) is further adapted to evaluate the set of monitoring parameters according to reference samples.

6. A monitoring device (107) according to claim 5, further comprising a third interface (303) interfacing said monitoring device (107) with the optical transceiver (105), the reference samples being provided by said optical transceiver (105) through said third interface (303) and corresponding to a portion of the optical signal after having being converted into informative symbols (207) and Forward Error Correction (209) processed.

7. A monitoring device (107) according to claim 5, wherein the reference samples are provided by the controller (109) through the second interface (119) and correspond to a portion of a training sequence, said training sequence having been conveyed by the optical signal to be processed by the optical transceiver (105).

8. A monitoring device (107) according to any of the claims 1 to 7, wherein said monitoring device (107) is a Software Defined Networking monitoring device.

9. A monitoring device (107) according to any of the claims 1 to 8, wherein the raw samples correspond to a portion from the optical signal after optical to electrical conversion of said optical signal.

10. A monitoring device (107) according to any of the claims 1 to 9, wherein the raw samples correspond to a portion from the optical signal after dispersion compensation and timing recovery being applied to said optical signal.

11. An optical transceiver (105) for receiving an optical signal, comprising:
- an analog to digital frontend (203), for converting the optical signal from an optical domain to an electrical signal
- a dispersion compensation unit (205) for compensating dispersion of the electrical signal,
- a timing recovery unit (205) for recovering timing of the electrical signal,
- a signal processing unit (207) for converting the electrical signal into informative symbols,
- a monitoring device (107) according to any of the claims 1 to 9,
the optical transceiver (105) providing to the monitoring device (107) through the second interface (119) raw samples corresponding to a portion of the electrical signal prior to conversion of said portion into informative symbols.

12. An optical transceiver (105) according to claim 11, wherein the monitoring device (107) is an independent device comprised in the optical transceiver (105).

13. An optical transceiver (105) according to claim 11, wherein the monitoring device (107) is comprised in the signal processing unit (207).

14. An optical transceiver (105) according to any of the claims 11 to 13 wherein the optical transceiver (105) is a Software Defined Networking optical transceiver.

15. A method for monitoring an optical signal to be processed by an optical transceiver (105), the method comprising the step of:
- receiving a signal processing algorithm from a controller (109) through a first interface (115) comprised in the monitoring device (107),
- configuring a monitoring processing unit (121) with the signal processing algorithm, said monitoring processing unit (121) being comprised in the monitoring device (107),
- receiving raw samples from the optical transceiver (105) through a second interface (119) comprised in the monitoring device (107), said raw samples corresponding to a portion from the optical signal converted to an electrical signal, prior to conversion of said portion into informative symbols,
- evaluating a set of monitoring parameters by processing the raw samples according to the signal processing algorithm.

## Patentansprüche

1. Überwachungsvorrichtung (107) zum Überwachen eines optischen Signals, das Informationssymbole, die von einem optischen Sendeempfänger (105) zu verarbeiten sind, übermittelt, wobei die Überwachungsvorrichtung (107) Folgendes umfasst:
- eine erste Schnittstelle (115) mit einer Steuerung (109),
- eine zweite Schnittstelle (119) mit dem optischen Sendeempfänger (105),
- eine Überwachungsverarbeitungseinheit (121),
wobei die Überwachungsverarbeitungseinheit (121) zu Folgendem angepasst ist:
- Ausgelegt werden mit einem Signalverarbeitungsalgorithmus, der über die erste Schnittstelle (115) empfangen wird,
- Empfangen von rohen Abtastwerten über die zweite Schnittstelle (119), wobei die rohen Abtastwerte einem Abschnitt des optischen Signals vor der Umwandlung des Abschnitts in Informationssymbole entsprechen,
- Beurteilen eines Satzes von Überwachungsparametern durch Verarbeiten der rohen Abtastwerte gemäß dem Signalverarbeitungsalgorithmus.

2. Überwachungsvorrichtung (107) nach Anspruch 1, wobei die Überwachungsvorrichtung (107) angepasst ist, kohärente optische Signale zu überwachen.

3. Überwachungsvorrichtung (107) nach einem der Ansprüche 1 bis 2, wobei die Überwachungsverarbeitungseinheit (121) den Satz von Überwachungsparametern gemäß einer Aktualisierungsrate periodisch beurteilt.

4. Überwachungsvorrichtung (107) nach Anspruch 3, wobei die Aktualisierungsrate größer ist als eine Dauer eines Symbols vom optischen Signal.

5. Überwachungsvorrichtung (107) nach einem der Ansprüche 1 bis 4, wobei die Überwachungsverarbeitungseinheit (121) ferner angepasst ist, den Satz von Überwachungsparametern gemäß Referenzabtastwerten zu beurteilen.

6. Überwachungsvorrichtung (107) nach Anspruch 5, die ferner eine dritte Schnittstelle (303) umfasst, die die Überwachungsvorrichtung (107) an den optischen Sendeempfänger (105) koppelt, wobei die Referenzabtastwerte vom optischen Sendeempfänger (105) über die dritte Schnittstelle (303) bereitgestellt werden und einem Abschnitt des optischen Signals nach der Umwandlung in Informationssymbole (207) und der Verarbeitung mittels Vorwärtsfehlerkorrektur (209) entsprechen.

7. Überwachungseinrichtung (107) nach Anspruch 5, wobei die Referenzabtastwerte von der Steuerung (109) über die zweite Schnittstelle (119) bereitgestellt werden und einem Abschnitt einer Trainingssequenz entsprechen, wobei die Trainingssequenz von dem optischen Signal, das vom optischen Sendeempfänger (105) zu verarbeiten ist, übermittelt wurde.

8. Überwachungsvorrichtung (107) nach einem der Ansprüche 1 bis 7, wobei die Überwachungsvorrichtung (107) eine Software-Defined-Networking-Überwachungsvorrichtung ist.

9. Überwachungsvorrichtung (107) nach einem der Ansprüche 1 bis 8, wobei die rohen Abtastwerte einem Abschnitt vom optischen Signal nach der Umwandlung des optischen Signals von optisch in elektrisch entsprechen.

10. Überwachungsvorrichtung (107) nach einem der Ansprüche 1 bis 9, wobei die rohen Abtastwerte einem Abschnitt vom optischen Signal nach der Anwendung einer Dispersionskompensation und einer Taktrückgewinnung auf das optische Signal entsprechen.

11. Optischer Sendeempfänger (105) zum Empfangen eines optischen Signals, der Folgendes umfasst:
- ein Analog-Digital-Frontend (203) zum Umwandeln des optischen Signals von einer optischen Domäne in ein elektrisches Signal,
- eine Dispersionskompensationseinheit (205) zum Kompensieren einer Dispersion des elektrischen Signals,
- eine Taktrückgewinnungseinheit (205) zum Rückgewinnen eines Takts des elektrischen Signals,
- eine Signalverarbeitungseinheit (207) zum Umwandeln des elektrischen Signals in Informationssymbole,
- eine Überwachungsvorrichtung (107) nach einem der Ansprüche 1 bis 9, wobei der optische Sendeempfänger (105) der Überwachungsvorrichtung (107) über die zweite Schnittstelle (119) rohe Abtastwerte bereitstellt, die einem Abschnitt des elektrischen Signals vor der Umwandlung des Abschnitts in Informationssymbole entsprechen.

12. Optischer Sendeempfänger (105) nach Anspruch 11, wobei die Überwachungsvorrichtung (107) eine unabhängige Vorrichtung ist, die im optischen Sendeempfänger (105) umfasst ist.

13. Optischer Sendeempfänger (105) nach Anspruch 11, wobei die Überwachungsvorrichtung (107) in der Signalverarbeitungseinheit (207) umfasst ist.

14. Optischer Sendeempfänger (105) nach einem der Ansprüche 11 bis 13, wobei der optische Sendeempfänger (105) ein optischer Software-Defined-Networking-Sendeempfänger ist.

15. Verfahren zum Überwachen eines optischen Signals, das von einem optischen Sendeempfänger (105) zu verarbeiten ist, wobei das Verfahren den folgenden Schritt umfasst:
- Empfangen eines Signalverarbeitungsalgorithmus von einer Steuerung (109) über eine erste Schnittstelle (115), die in der Überwachungsvorrichtung (107) umfasst ist,
- Auslegen einer Überwachungsverarbeitungseinheit (121) mit dem Signalverarbeitungsalgorithmus, wobei die Überwachungsverarbeitungseinheit (121) in der Überwachungsvorrichtung (107) umfasst ist,
- Empfangen von rohen Abtastwerten über eine zweite Schnittstelle (119), die in der Überwachungsvorrichtung (107) umfasst ist, vom optischen Sendeempfänger (105), wobei die rohen Abtastwerte einem Abschnitt vom optischen Signal entsprechen, dass vor der Umwandlung des Abschnitts in Informationssymbole in ein elektrisches Signal umgewandelt wurde,
- Beurteilen eines Satzes von Überwachungsparametern durch Verarbeiten der rohen Abtastwerte gemäß dem Signalverarbeitungsalgorithmus.

## Revendications

1. Dispositif de surveillance (107) destiné à surveiller un signal optique qui achemine des symboles d'information à traiter par un émetteur/récepteur optique (105), dans lequel ledit dispositif de surveillance (107) comprend :
- une première interface (115) avec un contrôleur (109),
- une seconde interface (119) avec l'émetteur/récepteur optique (105),
- une unité de traitement de surveillance (121),
dans lequel l'unité de traitement de surveillance (121) est adaptée :
- pour être configurée avec un algorithme de traitement de signal reçu par le biais de la première interface (115),
- pour recevoir des échantillons bruts par le biais de la seconde interface (119), dans lequel lesdits échantillons bruts correspondent à une partie qui provient du signal optique avant la conversion de ladite partie en symboles d'information,
- pour évaluer un ensemble de paramètres de surveillance en traitant les échantillons bruts selon l'algorithme de traitement de signal.

2. Dispositif de surveillance (107) selon la revendication 1, dans lequel ledit dispositif de surveillance (107) est adapté pour surveiller des signaux optiques cohérents.

3. Dispositif de surveillance (107) selon l'une quelconque des revendications 1 à 2, dans lequel l'unité de traitement de surveillance (121) évalue périodiquement l'ensemble de paramètres de surveillance selon un taux de rafraîchissement.

4. Dispositif de surveillance (107) selon la revendication 3, dans lequel le taux de rafraîchissement est supérieur à une durée d'un symbole qui provient du signal optique.

5. Dispositif de surveillance (107) selon l'une quelconque des revendications 1 à 4, dans lequel l'unité de traitement de surveillance (121) est en outre adaptée pour évaluer l'ensemble de paramètres de surveillance selon des échantillons de référence.

6. Dispositif de surveillance (107) selon la revendication 5, qui comprend en outre une troisième interface (303) qui fait l'interface entre ledit dispositif de surveillance (107) et l'émetteur/récepteur optique (105), dans lequel les échantillons de référence sont fournis par ledit émetteur/récepteur optique (105) par le biais de ladite troisième interface (303) et correspondent à une partie du signal optique après conversion en symboles d'information (207) et traitement par correction d'erreur sans voie de retour (209).

7. Dispositif de surveillance (107) selon la revendication 5, dans lequel les échantillons de référence sont fournis par le contrôleur (109) par le biais de la seconde interface (119) et correspondent à une partie d'une séquence d'apprentissage, dans lequel ladite séquence d'apprentissage a été acheminée par le signal optique à traiter par l'émetteur/récepteur optique (105).

8. Dispositif de surveillance (107) selon l'une quelconque des revendications 1 à 7, dans lequel ledit dispositif de surveillance (107) est un dispositif de surveillance de mise en réseau définie par logiciel.

9. Dispositif de surveillance (107) selon l'une quelconque des revendications 1 à 8, dans lequel les échantillons bruts correspondent à une partie du signal optique après la conversion d'optique en électrique dudit signal optique.

10. Dispositif de surveillance (107) selon l'une quelconque des revendications 1 à 9, dans lequel les échantillons bruts correspondent à une partie du signal optique après qu'une compensation de dispersion et une récupération de temporisation ont été appliquées audit signal optique.

11. Émetteur/récepteur optique (105) destiné à recevoir un signal optique, qui comprend :
- un dispositif d'entrée analogique/numérique (203), destiné à convertir le signal optique d'un domaine optique en un signal électrique,
- une unité de compensation de dispersion (205) destinée à compenser la dispersion du signal électrique,
- une unité de récupération de temporisation (205) destinée à récupérer la temporisation du signal électrique,
- une unité de traitement de signal (207) destinée à convertir le signal électrique en symboles d'information,
- un dispositif de surveillance (107) selon l'une quelconque des revendications 1 à 9, dans lequel l'émetteur/récepteur optique (105) fournit au dispositif de surveillance (107), par le biais de la seconde interface (119), des échantillons bruts qui correspondent à une partie du signal électrique avant la conversion de ladite partie en symboles d'information.

12. Émetteur/récepteur optique (105) selon la revendication 11, dans lequel le dispositif de surveillance (107) est un dispositif indépendant compris dans l'émetteur/récepteur optique (105).

13. Émetteur/récepteur optique (105) selon la revendication 11, dans lequel le dispositif de surveillance (107) est compris dans l'unité de traitement de signal (207).

14. Émetteur/récepteur optique (105) selon l'une quelconque des revendications 11 à 13, dans lequel l'émetteur/récepteur optique (105) est un émetteur/récepteur optique de mise en réseau définie par logiciel.

15. Procédé de surveillance d'un signal optique à traiter par un émetteur/récepteur optique (105), dans lequel le procédé comprend l'étape qui consiste à :
- recevoir un algorithme de traitement de signal de la part d'un contrôleur (109) par le biais d'une première interface (115) comprise dans le dispositif de surveillance (107),
- configurer une unité de traitement de surveillance (121) avec l'algorithme de traitement de signal, dans lequel ladite unité de traitement de surveillance (121) est comprise dans le dispositif de surveillance (107),
- recevoir des échantillons bruts de la part de l'émetteur/récepteur optique (105) par le biais d'une seconde interface (119) comprise dans le dispositif de surveillance (107), dans lequel lesdits échantillons bruts correspondent à une partie du signal optique convertie en un signal électrique, avant la conversion de ladite partie en des symboles d'information,
- évaluer un ensemble de paramètres de surveillance en traitant les échantillons bruts selon l'algorithme de traitement de signal.
